# EUROPEAN PATENT APPLICATION

(11) **EP 0 589 521 A1**
(43) Date of publication of application: **30.03.1994**
(21) Application number: 93202689.1
(22) Date of filing: 16.09.1993
(51) Int. Cl.: A47J 37/04

(54) **Supporting unit for supporting products, in particular poultry, such as chickens, in an oven or the like**

(30) Priority: 21.09.1992 NL 9201627
(71) Applicant: FRI-JADO B.V., NL-4878 AA Etten-Leur (NL)
(72) Inventor: Halters, Marinus Antonius Maria, NL-4854 SB Bavel (NL)
(74) Representative: Mommaerts, Johan Hendrik, Dipl.-Phys.

(57) **Abstract**

Supporting unit for supporting products, in particular poultry, such as chickens, in an oven or the like, at least comprising a rotary main support with drive, which main support is designed to move one or more auxiliary supports, which can support the products, along a predetermined path, the auxiliary supports retaining essentially the same orientation relative to the environment during their movement. The or each auxiliary support (17) comprises at least two elongated bearing parts (19, 20), this being in such a way that the products to be supported can be suspended between the elongated bearing parts (19, 20).

## Description

The present invention relates to a supporting unit for supporting products, in particular poultry, such as chickens, in an oven or the like, at least comprising a rotary main support with drive, which main support is designed to move one or more auxiliary supports, which can support the products, along a predetermined path, the auxiliary supports retaining essentially the same orientation relative to the environment during their movement.

Such a supporting unit is generally known and described in many publications. In the known supporting units the products, such as poultry, are supported during the rotary movement in an oven by baskets or the like of grid material, which may be provided with a cover which is generally also made of grid material. Products such as poultry are also sometimes rotated on a spit during the heat treatment.

All these known supporting units either have the disadvantage that they are very difficult to clean or that the products, such as poultry, cannot be removed easily from the auxiliary supports. In the case of basket-type auxiliary supports, the cleaning problem occurs, while where rotary spits are used the product to be prepared cannot be removed easily from the spit, which is aggravated by the temperature of the product and the spit during or just after the preparation of the product in an oven or the like.

The present invention provides a solution to the abovementioned disadvantages, and for this purpose is characterized in that the or each auxiliary support comprises at least two elongated bearing parts, this being in such a way that the products to be supported can be suspended between the elongated bearing parts.

The embodiment of the supporting unit according to the invention provides a number of very important advantages. Firstly, no cleaning problem exists here, since the auxiliary supports are elongated and do not have a grid structure. Moreover, the products present at that moment between the bearing parts in the oven or the like can be removed very easily at any time, for example using a fork.

Special features of the supporting unit according to the invention are described in sub-claims 2 - 4.

The invention also relates to an auxiliary support which is obviously intended for use in the supporting unit according to the invention.

In addition, the invention relates to a bearing part which is obviously intended for use in the auxiliary support according to the invention.

Finally, the invention provides a device for preparing products with the use of heat and/or keeping products hot, in particular poultry, at least comprising a casing forming a treatment area, in which heating means are present, and also supporting means for supporting the products to be prepared and/or kept hot, which device is characterized in that the supporting means are designed in the form of a supporting unit according to the invention.

The invention will be explained in greater detail below with reference to the appended drawing, in which:
Fig. 1 shows a diagrammatic representation of a common hot-air oven;
Fig. 2 shows an embodiment of the supporting unit according to the invention in side view;
Fig. 3 shows one of the auxiliary supports shown in the supporting unit of Fig. 2, in perspective view;
Fig. 4 shows an adjustable embodiment of an auxiliary support according to the invention, in perspective view; and
Fig. 5 shows a side view of a chicken which is suspended between two bearing parts according to the invention.

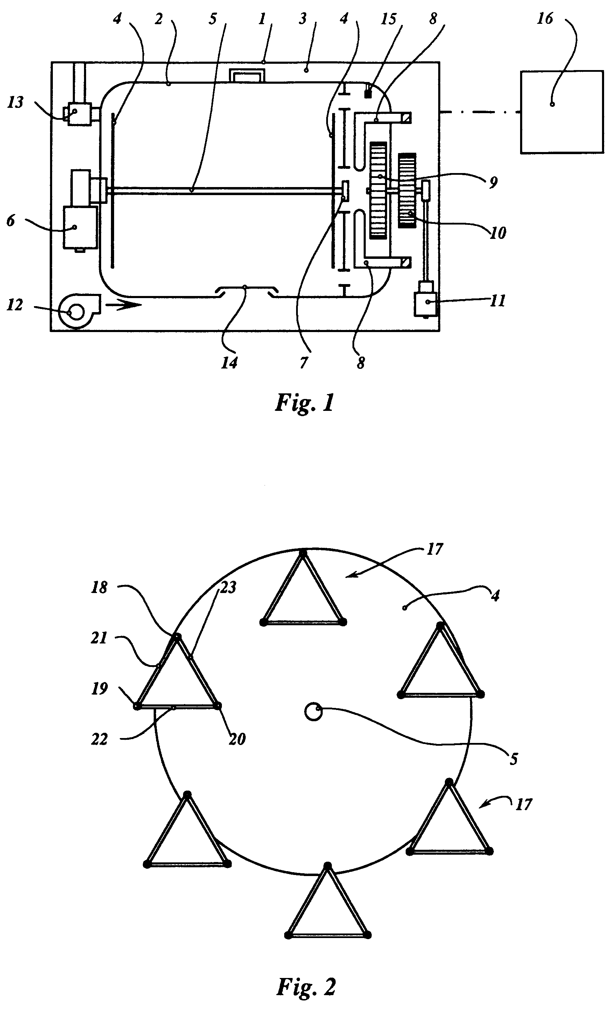

Fig. 1 shows a common hot-air oven, which comprises an external casing 1 and a treatment area 2, with an insulation space 3 between them. The treatment area 2 contains a supporting unit which consists of a main support comprising two circular plates 4 which are connected to each other by a central shaft 5. Said shaft 5 is driven by a motor 6 at one side and is supported in a bearing 7 at the other side. For the sake of clarity, no auxiliary support is shown here, but it will be clear that said support lies between the plates 4. This oven also comprises heating elements 8, and a hot-air fan 9 which is connected to a cooling air fan 10, which fans can be driven by a fan motor 11. The cooling air fan 10 serves to circulate cooling air through the interspace 3, to which outside air may also be supplied if necessary by a fan 12, which is in communication with the environment.

This casing also contains an extractor 13, which can place the treatment area 2 in communication with the environment. When this extractor 13 is in operation in order to extract air from the treatment area 2, the valve 14 will open automatically and air will flow out of the interspace 3 into the treatment area.

Reference number 15 indicates a temperature probe, by means of which the temperature in the treatment area can be measured. The heating in the oven and the cooling in the interspace can be regulated by means of a diagrammatically shown control unit 16. The unit 16 also controls the speed of rotation of the supporting unit.

Fig. 2 shows a plate 4 with the drive shaft 5 in front view. Auxiliary supports 17 according to the invention, comprising a fastening 18 by means of which the auxiliary supports are freely rotatably connected to the plates 4, are also shown therein. The auxiliary supports also comprise two bearing parts in the form of metal bars 19 and 20, which are interconnected near the fastening point 18 by connecting bars 21, 22 and 23. It will be clear that the auxiliary supports are suspended in a corresponding way in the other plate 4, and that on rotation of the two plates by driving with drive shaft 5 and motor 6 the auxiliary supports, and thus the metal bars 19, 20 retain the same orientation relative to the environment. The auxiliary supports are preferably detachably connected to the plates 4.

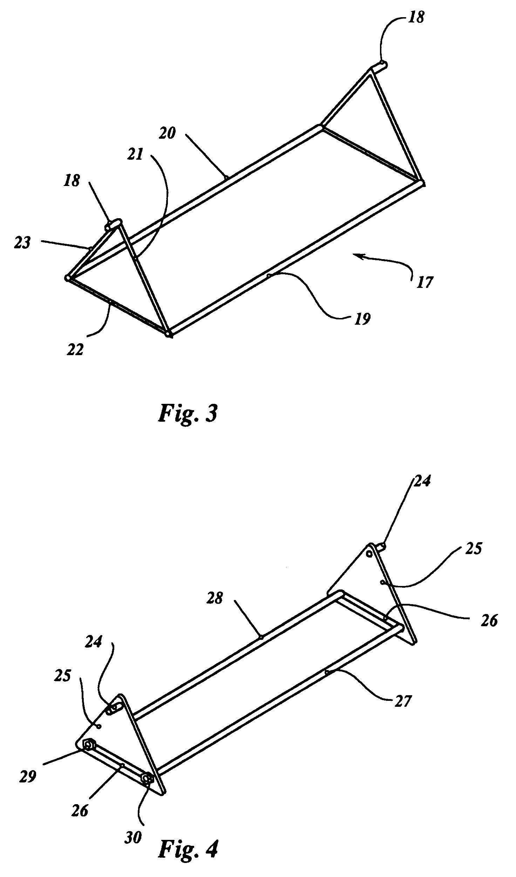

Fig. 3 shows in perspective view an auxiliary support 17 from Fig. 2, in which the various parts are clearly visible.

Fig. 4 shows a special embodiment of an auxiliary support according to the invention, comprising two fastening parts 24, which are disposed in side plates 25. Said side plates 25 comprise a groove 26, in which the bearing parts, in this case also in the form of metal bars 27 and 28, can be moved relative to each other. The bars can be fixed by providing them at both ends with a stud bolt, by which they can be fixed relative to each other and the plates 25 using a nut 29, 30 respectively. The adjustable nature of the bearing parts in such an auxiliary support provides the possibility of suspending products therein, in particular poultry, such as chickens of different sizes.

The device shown in Fig. 1 advantageously has no drive shaft 5, and the plates 4 are preferably driven by a common drive. It is possible in this way to increase the stability of the auxiliary supports 17 on rotation of the unit, through the fact that the bars 21 and 23 and the side plates 25 can be made lower, without being impeded by each other or the drive shaft. Larger products can also be supported in this way.

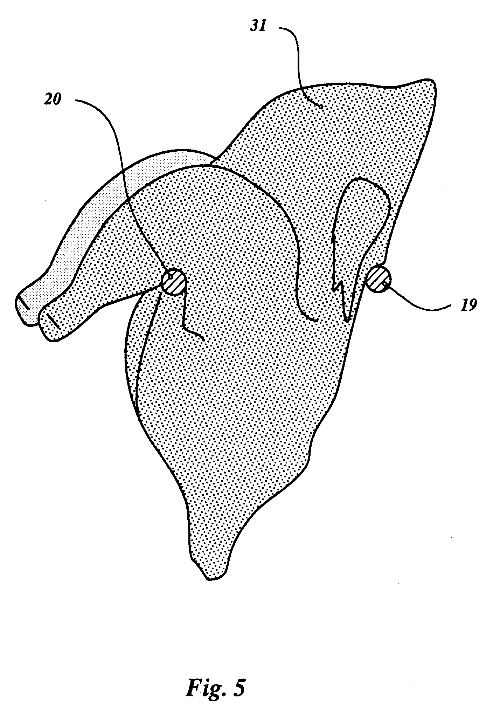

Fig. 5 shows a chicken 31 suspended between two metal bars 19, 20 in the auxiliary part shown in Fig. 3.

It will be clear that many variations of the supporting unit according to the invention will be obvious to the person skilled in the art. For instance, the number of bearing parts can be varied and, for example, a third or even a fourth bearing part can be fitted below the bearing parts shown in the figures, in order to form several supporting points for the products.

## Claims

1. Supporting unit for supporting products, in particular poultry, such as chickens, in an oven or the like, at least comprising a rotary main support with drive, which main support is designed to move one or more auxiliary supports, which can support the products, along a predetermined path, the auxiliary supports retaining essentially the same orientation relative to the environment during their movement, **characterized in that** the or each auxiliary support (17) comprises at least two elongated bearing parts (19, 20; 27, 28), this being in such a way that the products to be supported can be suspended between the elongated bearing parts (19, 20; 27, 28).

2. Supporting unit according to claim 1, **characterized in that** the or each auxiliary support (17) is freely rotatably connected to the main support and comprises two elongated bearing parts (19, 20; 27, 28).

3. Supporting unit according to claim 1 or 2, **characterized in that** the or each bearing part (19, 20; 27, 28) is in the form of a metal bar.

4. Supporting unit according to one or more of the preceding claims, **characterized in that** the distance between the bearing parts (19, 20; 27, 28) can be regulated.

5. Auxiliary support obviously intended for use in the supporting unit according to one or more of claims 1 - 4.

6. Bearing part obviously intended for use in an auxiliary support according to claim 5.

7. Device for preparing products with the use of heat and/or keeping products hot, in particular poultry, at least comprising a casing forming a treatment area, in which heating means are present, and also supporting means for supporting the products to be prepared and/or kept hot, **characterized in that** the supporting means are designed in the form of a supporting unit according to one or more of claims 1 - 4.
